(19) Europäisches Patentamt
European Patent Office
Office européen des brevets

(11) **EP 3 474 619 B1**

(12) **FASCICULE DE BREVET EUROPEEN**

(45) Date de publication et mention
de la délivrance du brevet:
**05.05.2021 Bulletin 2021/18**

(21) Numéro de dépôt: **18201694.9**

(22) Date de dépôt: **22.10.2018**

(51) Int Cl.:
*H04W 72/04* *(2009.01)*

(54) **PROCÉDÉ D'ALLOCATION DE RESSOURCES DE TRANSMISSION À APPRENTISSAGE PAR RENFORCEMENT**

**VERSTÄRKUNGSLERNVERFAHREN ZUR ZUWEISUNG VON ÜBERTRAGUNGSBETRIEBSMITTELN**

METHOD OF REINFORCEMENT LEARNING FOR ALLOCATION OF TRANSMISSION RESOURCES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.10.2017 FR 1759982**

(43) Date de publication de la demande:
**24.04.2019 Bulletin 2019/17**

(73) Titulaire: **Commissariat à l'énergie atomique et aux énergies alternatives 75015 Paris (FR)**

(72) Inventeurs:
- **COMSA, Ioan-Sorin**
  **38000 Grenoble (FR)**
- **DE DOMENICO, Antonio**
  **38000 Grenoble (FR)**
- **KTÉNAS, Dimitri**
  **38340 Voreppe (FR)**

(74) Mandataire: **Brevalex 95, rue d'Amsterdam 75378 Paris Cedex 8 (FR)**

(56) Documents cités:
- EINAR CESAR SANTOS: "A Simple Reinforcement Learning Mechanism for Resource Allocation in LTE-A Networks with Markov Decision Process and Q-Learning", ARXIV.ORG, CORNELL UNIVERSITY LIBRARY, 201 OLIN LIBRARY CORNELL UNIVERSITY ITHACA, NY 14853, 27 septembre 2017 (2017-09-27), XP080823880,
- IOAN SORIN COMSA ET AL: "A novel dynamic Q-learning-based scheduler technique for LTE-advanced technologies using neural networks", LOCAL COMPUTER NETWORKS (LCN), 2012 IEEE 37TH CONFERENCE ON, IEEE, 22 octobre 2012 (2012-10-22), pages 332-335, XP032321471, DOI: 10.1109/LCN.2012.6423642 ISBN: 978-1-4673-1565-4
- YAU KOK-LIM ALVIN ET AL: "Reinforcement learning models for scheduling in wireless networks", FRONTIERS OF COMPUTER SCIENCE, SPRINGER BERLIN HEIDELBERG, BERLIN/HEIDELBERG, vol. 7, no. 5, 10 août 2013 (2013-08-10), pages 754-766, XP035373253, ISSN: 2095-2228, DOI: 10.1007/S11704-013-2291-3 [extrait le 2013-08-10]

**Description**

**DOMAINE TECHNIQUE**

Le domaine de l'invention est celui des systèmes de télécommunication multi-accès offrant une pluralité de ressources de transmission. L'invention concerne la gestion des ressources de transmission et porte plus particulièrement sur un ordonnancement mis en œuvre en deux étapes découplées avec tout d'abord un ordonnancement dans le domaine temporel pour sélectionner un groupe de flux de données sur la base de besoins en termes de qualité de service, typiquement les flux de données plus urgents, puis un ordonnancement dans le domaine fréquentiel prenant en considération l'état du canal de transmission pour allouer les ressources radio aux flux de données du groupe sélectionné.

**ÉTAT DE LA TECHNIQUE ANTÉRIEURE**

Les réseaux mobiles de 5$^{ème}$ génération seront caractérisés par la présence de multiples services dont les besoins seront extrêmement hétérogènes. Par exemple les services de Haut Débit mobile extrême (ou *Extreme Mobile Broadband*) nécessitent des débits de données très importants, les applications Ultra-Fiables à Faible latence (ou *Ultra-reliable Low latency*) nécessitent de très faibles latences et de très faibles taux d'erreur, et les services de communication massive de type machine (pour *Massive Machine-type Communication*) vont imposer la présence d'une très importante densité de connexions d'utilisateurs. Ces différents besoins sont souvent contradictoires et l'optimisation conjointe de ces besoins est un problème difficile à résoudre.

La technique d'accès OFDMA (*Orthogonal Frequency Division Multiple Access*) permet une allocation de la ressource radio à granularité fine où chaque unité de ressource RB (*Resource Block*) peut être allouée et modulée de façon adaptative pour exploiter et tirer avantage des diversités fréquentielles de chaque utilisateur. Pour répondre aux besoins hétérogènes en termes de Qualité de Service (QoS pour *Quality of Service*) des différents services d'un réseau de 5$^{ème}$ génération, une gestion flexible de la ressource radio (RRM pour *Radio Resource Management*) est nécessaire.

La gestion de la ressource radio exploite un ordonnanceur de paquets qui est en charge de partager la ressource radio entre les différents utilisateurs actifs à chaque intervalle temporel de transmission. Cet ordonnanceur dispose d'un ensemble de règles d'ordonnancement utilisées pour contrôler les paramètres tels que la puissance de transmission, le schéma de codage et modulation et la bande passante allouée. L'objectif est d'utiliser aussi efficacement que possible les ressources radio pour augmenter l'efficacité spectrale, tout en garantissant aux utilisateurs le niveau de service requis par chaque demande de trafic.

On peut distinguer les quatre types de règles d'ordonnancement suivants.

- Règles de type « Canal inconnu / QoS inconnue ». Ces règles sont caractérisées par une implémentation très simple ne nécessitant ni connaissance d'un indicateur de qualité du canal (CQI pour *Channel Quality Indicator*) ni mesures de QoS. Par exemple, un ordonnanceur de type *Round-Robin* alloue une bande passante identique à chaque utilisateur actif ;
- Règles de type « Canal inconnu / QoS connue ». Ces règles visent à satisfaire des besoins en termes de QoS sans prendre en compte les informations CQI. Par exemple, la règle EDF (pour *Earliest to Deadline First*) attribue une priorité d'autant plus grande à un paquet que son échéance d'envoi est proche, sans aucune considération de l'état du canal ;
- Règles de type « Canal connu / QoS inconnue ». Ces règles fournissent un bon compromis entre performance et complexité en prenant en considération la diversité des utilisateurs. Leur performance reste toutefois soumise à la fiabilité des informations CQI. On peut notamment citer la règle MCI (pour *Maximum Carrier to Interference*) qui vise à maximiser le débit total instantané ;
- Règles de type « Canal connu / QoS connu ». Ces règles prennent en considération à la fois des informations QoS et CQI. On peut notamment citer les règles PF-BF (pour *Proportional Fair - Barrier Function*), PF-EXP (pour *Proportional Fair - EXPonential*) et PF-OPLF (pour *Proportional Fair - Opportunistic Packet Loss Fair*) qui s'attachent respectivement à garantir un débit, à minimiser les délais et à réduire le taux de perte de paquet.

Aucune de ces règles ne peut être considérée comme la solution la plus appropriée pour toutes les conditions de réseau et tous les besoins de QoS. Pour répondre à des contraintes de délai, un ordonnancement en deux étapes découplées a été proposé avec tout d'abord un ordonnancement dans le domaine temporel pour sélectionner un groupe de paquets sur la base de besoins en termes de qualité de service, typiquement les paquets plus urgents, puis un ordonnancement dans le domaine fréquentiel prenant en considération l'état du canal de transmission pour allouer les ressources radio aux paquets du groupe sélectionné. Un tel ordonnancement est par exemple connu des brevets EP 2 148 478 B1 et EP 2 936 908 B1. Mais ces solutions d'ordonnancement ne permettent pas de différentier de multiples catégories de trafic ayant différents besoins en termes de QoS Le document de l'art antérieur "A Simple Reinforcement Learning Mechanism for Resource Allocation in LTE-A Networks with Markov Decision Process and Q-Learning" de Einar Cesar Santos, décrit une allocation de ressources dans les réseaux sans fil. L'apprentissage par renforcement est une méthode dynamique et efficace pour soutenir la réalisation de l'allocation des ressources en maintenant correctement les niveaux de qualité de service pour les applications.

**EXPOSÉ DE L'INVENTION**

L'invention a pour objectif de proposer un procédé d'ordonnancement de paquets appartenant à une pluralité de catégories de paquets dans un système de télécommunication multi-accès partageant une pluralité de ressources de transmission, capable de traiter des flux de données hétérogènes tout en étant apte à offrir des performances optimales en termes de satisfaction de contraintes QoS.

A cet effet, l'invention propose un procédé qui comprend, pour un état du système de télécommunication multi-accès, la détermination, par itérations d'un apprentissage par renforcement, d'un plan d'allocation de ressource venant maximiser une somme de récompenses. Chaque itération de l'apprentissage par renforcement comprend :

- une allocation des ressources de transmission aux flux de données selon un plan d'allocation de ressources ;
- la transmission des paquets au moyen des ressources de transmission allouées ;
- pour chacune des catégories de flux de données, le calcul d'au moins un indicateur de performance de transmission de chacun des flux de données de la catégorie, et la comparaison, pour chacun des flux de données de la catégorie, de l'au moins un indicateur de performance de transmission calculé à un seuil représentatif d'une contrainte de qualité de service portant sur l'au moins un indicateur de performance de transmission pour la catégorie, et
- la détermination d'une récompense en fonction du résultat de ladite comparaison pour chacun des flux de données de chacune des catégories.

Certains aspects préférés mais non limitatifs de ce procédé sont les suivants :

- le plan d'allocation de ressources comprend une règle de hiérarchisation et au moins une première et une seconde règle d'ordonnancement, l'allocation des ressources de transmission comprenant deux étapes consistant en :

  o un ordonnancement dans le domaine temporel réalisé par un classificateur temporel configuré pour hiérarchiser les catégories de flux de données selon la règle de hiérarchisation en au moins une catégorie prioritaire et une catégorie secondaire ; et
  o un ordonnancement dans le domaine fréquentiel réalisé par un classificateur fréquentiel configuré pour :

    ▪ ordonnancer les flux de données de la catégorie prioritaire selon la première règle d'ordonnancement et allouer des ressources de transmission aux flux de données de la catégorie prioritaire ainsi ordonnancés; et
    ▪ en cas de ressources restantes, ordonnancer les flux de données de la catégorie secondaire selon la seconde règle d'ordonnancement et allouer des ressources de transmission restantes aux flux de données de la catégorie secondaire ainsi ordonnancés.

- chaque itération de l'apprentissage par renforcement comprend:

  o selon une probabilité $P_a$, une sélection d'exploitation consistant à sélectionner le plan d'allocation de ressources venant maximiser la somme des récompenses à ce stade des itérations ; et
  o selon une probabilité $P_{a*}$, une sélection d'exploration consistant à sélectionner un plan d'allocation de ressources différent du plan d'allocation de ressources venant maximiser la somme des récompenses à ce stade des itérations.

- l'au moins un indicateur de performance de transmission est l'un parmi un délai de transmission, un débit de transmission et un taux de perte de transmission.

**BRÈVE DESCRIPTION DES DESSINS**

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :

- la figure 1 est un schéma illustrant un procédé d'ordonnancement de paquets exploitant une table de correspondance (LUT pour *look up table*) dont le contenu résulte de la mise en œuvre d'un apprentissage par renforcement ;
- la figure 2 est un schéma illustrant un mode de réalisation possible de l'apprentissage par renforcement mettant en œuvre un compromis exploitation/exploration.

## EXPOSÉ DÉTAILLÉ DE MODES DE RÉALISATION PARTICULIERS

L'invention se place dans le cadre d'un système de télécommunication multi-accès où une pluralité d'utilisateurs et/ou d'applications ont accès à des ressources de transmission communes, et dans lequel, pour chaque accès, les données sont transmises sous forme de paquets. Un exemple typique d'utilisation de l'invention est celui d'un système OFDMA dans lequel la bande passante disponible est divisée en $N_{RB}$ unités de ressource RB (*Resource Block*) où une unité de ressource RB représente la quantité minimale de ressources fréquentielles qu'une station de base peut allouer à chaque intervalle de transmission (TTI pour *Transmission Time Interval*).

Dans le cadre de l'invention, le système de télécommunication offre ses ressources de transmission à P catégories de flux de données (dans ce qui suit un flux de données est associé à un utilisateur). On note ainsi $T_C$ = {1 ... P} l'ensemble des catégories de flux de données. Chaque catégorie $p \in T_C$ est caractérisée par un ensemble d'utilisateurs actifs $UE_P$ = {1 ... $I_p$} (i.e. un ensemble de flux de données) et un ensemble d'objectifs et d'exigences spécifiques en termes de QoS, noté $O_P$ = {1 ... $N_{Op}$}, cet ensemble $O_P$ comprenant par exemple un débit garanti GBR (*Guaranteed Bit Rate*), un délai, un taux de perte de paquets PLR (*Packet Loss Rate*).

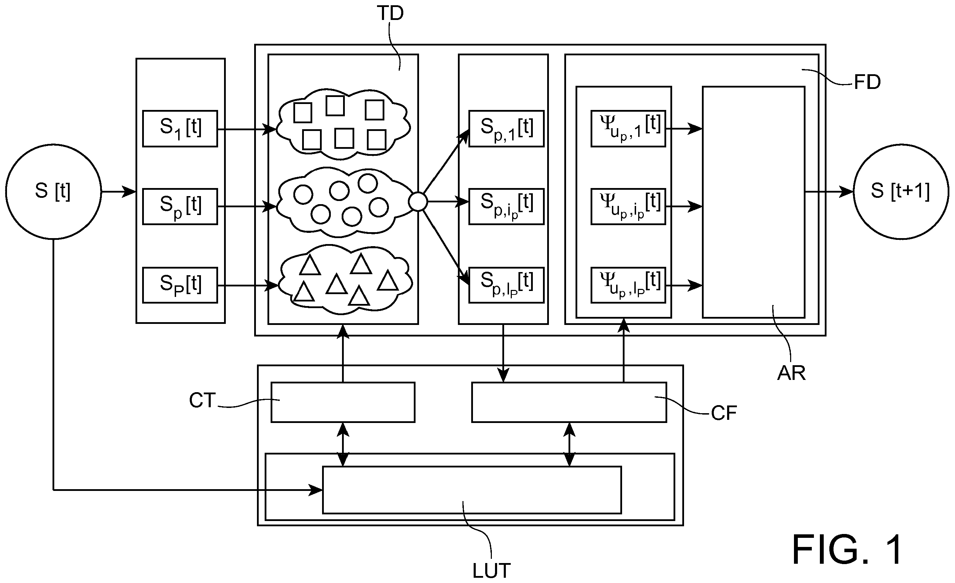

Afin d'ordonnancer de manière efficace des catégories de flux de données hétérogènes présentant différentes priorités, l'invention exploite un planificateur configuré pour, à chaque intervalle temporel de transmission, sélectionner un plan d'allocation de ressources et réaliser une allocation des $N_{RB}$ ressources de transmission aux flux de données conformément au plan d'allocation de ressources sélectionné. Dans un mode de réalisation privilégié représenté sur la figure 1, le planificateur est configuré pour réaliser un ordonnancement en deux étapes découplées, avec tout d'abord une étape d'ordonnancement dans le domaine temporel TD puis une étape d'ordonnancement dans le domaine fréquentiel FD. Comme cela sera détaillé par la suite, le plan d'allocation des ressources comprend dans ce cas une règle de hiérarchisation et au moins une première et une seconde règle d'ordonnancement.

A un intervalle de transmission TTI $t$, le système de télécommunication présente un état courant $s[t]$ et chaque catégorie de flux de données $p \in T_C$ présente un état courant $s_p[t]$. L'ordonnancement dans le domaine temporel est réalisé par un classificateur temporel CT configuré pour réaliser la sélection d'une règle de hiérarchisation et la hiérarchisation des catégories de flux de données selon la règle de hiérarchisation sélectionnée en au moins une catégorie prioritaire et une catégorie secondaire. Le classificateur temporel CT vient ainsi hiérarchiser les catégories de flux de données en fonction de leurs états courants et les fait suivre de manière itérative à un classificateur fréquentiel CF, de la plus prioritaire à la moins prioritaire, pour définir l'ordonnancement dans le domaine fréquentiel.

Une stratégie possible de hiérarchisation consiste à déterminer l'ordonnancement des flux de données selon un niveau de priorité («priority level ») qui correspond à chaque flux, comme défini par exemple dans le tableau 6.1.7 du 3GPP Technical Specification Group Services and System Aspects, « TS 23.203, Policy and charging control architecture, » (Release 14), V14.4.0, Juin 2017. Une autre stratégie possible est la hiérarchisation des flux de données donnant la priorité aux flux GBR (flux à débit garanti, GBR désignant un « *Guaranteed Bit Rate* ») vis-à-vis des flux non-GBR (flux à débit non garanti).

Dans l'exemple de la figure 1, c'est la catégorie $p$ qui est sélectionnée en tant que catégorie prioritaire.

L'ordonnancement dans le domaine fréquentiel est réalisé par le classificateur fréquentiel CF qui exploite en entrée l'état des utilisateurs {$s_{p,1}[t]$,...,$s_{p,I_p}[t]$} de la catégorie sélectionnée $p$. Le classificateur fréquentiel est configuré pour réaliser :

   ◦ la sélection d'une première règle d'ordonnancement, la réalisation d'un ordonnancement des flux de données de la catégorie prioritaire selon la première règle d'ordonnancement sélectionnée et une allocation de ressources aux flux de données de la catégorie prioritaire ordonnés conformément au premier ordonnancement ; et
   ◦ en cas de ressources restantes, la sélection d'une seconde règle d'ordonnancement, la réalisation d'un ordonnancement des flux de données de la catégorie secondaire selon la seconde règle d'ordonnancement sélectionnée et une allocation des ressources restantes aux flux de données de la catégorie secondaire ordonnés selon le second ordonnancement.

Le classificateur fréquentiel CF sélectionne ainsi la règle d'ordonnancement la plus appropriée $u_p$ parmi $N_R$ règles possibles ($u_p \in U$ = {0,1,...,$N_R$}) pour améliorer la QoS des flux de données de la catégorie prioritaire $p$. Ici $u_k$ = 0 indique que la catégorie $k$ ne fait pas l'objet d'un ordonnancement du fait d'une absence de ressources restantes. Des exemples de règles d'ordonnancement ont été donnés dans la partie introductive.

L'application de la règle d'ordonnancement la plus appropriée $u_p$ fournit pour chaque utilisateur $i_p \in UE_P$ de la catégorie sélectionnée $p$ sa priorité $\Psi_{u_p,i_p}$ dans le schéma d'allocation de ressources. L'allocation de ressource AR est réalisée de manière itérative en venant allouer une unité de ressource RB disponible à l'utilisateur de plus haute priorité, soit jusqu'à ce qu'il n'y ait plus de ressources disponibles (i.e. toutes les unités de ressource RB ont été allouées) soit jusqu'à ce tous les utilisateurs $i_p \in UE_P$ de la catégorie prioritaire $p$ aient été servis (i.e. il n'y a plus de données à transmettre pour cette catégorie de flux de données). Dans ce dernier cas, s'il y a des ressources restantes, le classificateur temporel CT fait passer le flux de données catégorie secondaire de plus haut niveau au classificateur fréquentiel CF. Et ainsi de suite tant que toutes les unités de ressource RB n'ont pas été allouées ou que tous les utilisateurs de toutes les catégories n'ont pas été servis. On note $J = \{J_1[t], ...,J_P[t]\}$ l'ensemble qui décrit le nombre d'unités de ressource RB alloué à chaque TTI t à chacune des catégories $p \in T_C$.

Dans le cadre de l'invention, le planificateur est configuré pour interroger une table de correspondance LUT afin d'identifier, à partir de l'état courant $s[t]$ du système de télécommunication multi-accès, le plan d'allocation de ressources à mettre en œuvre. Dans le cadre du mode de réalisation privilégié, l'un et/ou l'autres des classificateurs temporel CT et fréquentiel CF sont configurés pour réaliser, à chaque intervalle temporel de transmission TTI, l'interrogation de la table de correspondance LUT pour identifier, à partir de l'état courant $s[t]$ du système de télécommunication multi-accès, respectivement la règle de hiérarchisation et/ou la première règle d'ordonnancement $u_p$ (et le cas échéant la ou les règles d'ordonnancement applicables à la ou les catégories secondaires faisant l'objet d'une allocation de ressources) à sélectionner.

L'invention porte selon un premier aspect sur la création de la table de correspondance. Elle concerne plus particulièrement un procédé de détermination d'une allocation de ressources à des paquets appartenant à une pluralité de catégories de flux de données dans un système de télécommunication multi-accès partageant une pluralité de ressources de transmission, ce procédé comprenant, pour un état du système de télécommunication multi-accès, la détermination, par itérations d'un apprentissage par renforcement, d'une allocation de ressource venant maximiser une somme de récompenses.

Chaque itération de l'apprentissage par renforcement comprend :

- une allocation des ressources de transmission aux flux de données selon un plan d'allocation de ressources ;
- la transmission des paquets au moyen des ressources de transmission allouées;
- pour chacune des catégories de flux de données, le calcul d'au moins un indicateur de performance de transmission (KPI pour *Key Performance Indicator*) de chacun des flux de données de la catégorie, et la comparaison, pour chacun des flux de données de la catégorie, d'au moins un indicateur de performance de transmission calculé (noté $x_{p,i_p,o}$) à un seuil (noté $\bar{x}_{p,o}$) représentatif d'une contrainte de qualité de service QoS portant sur au moins un indicateur de performance de transmission pour la catégorie, et
- la détermination d'une récompense en fonction du résultat de ladite comparaison pour chacun des flux de données de chacune des catégories.

Ainsi, pour permettre de satisfaire les contraintes en termes de QoS de catégories hétérogènes de flux de données, l'invention utilise un apprentissage par renforcement pour apprendre le plan d'allocation de ressources optimal à mettre en œuvre par le planificateur. Dans le cadre du mode de réalisation privilégié, l'apprentissage par renforcement permet de déterminer la règle de hiérarchisation et/ou les règles d'ordonnancement optimales à mettre en œuvre respectivement par le classificateur temporel qui hiérarchise de manière dynamique les différentes catégories de flux de données et par le classificateur fréquentiel qui sélectionne la règle d'ordonnancement la plus appropriée pour allouer des ressources de transmission à la catégorie de flux de données activée (i.e. d'abord la catégorie prioritaire puis les catégories secondaires selon la hiérarchisation réalisée par le classificateur temporel).

Dans un mode de réalisation, les deux classificateurs temporel et fréquentiel exploitent une table de correspondance issue d'un apprentissage par renforcement.

Dans un autre mode de réalisation, seul le classificateur fréquentiel exploite une table de correspondance issue d'un apprentissage par renforcement. Cet apprentissage permet d'apprendre la stratégie la plus appropriée pour allouer des ressources de transmission aux différentes catégories de flux de données et ainsi de déterminer la règle d'ordonnancement à appliquer à une catégorie donnée pour optimiser la QoS. Dans un tel cas de figure, le classificateur temporel peut être relativement simple, et mettre par exemple en œuvre une stratégie de type *Round-Robin* ou une stratégie basée sur des priorités fixes pour les catégories de flux de données (de sorte qu'une première catégorie n'est traitée par le classificateur fréquentiel que lorsque les catégories de priorité supérieure n'ont pas de données à transmettre).

Dans encore un autre mode de réalisation, seul le classificateur temporel exploite une table de correspondance issue d'un apprentissage par renforcement. Cet apprentissage permet, pour un état courant du système $s[t]$, de déterminer la règle de hiérarchisation des catégories de flux de données la plus appropriée. Dans un tel cas de figure, le classificateur fréquentiel peut être relativement simple, et mettre par exemple en œuvre la stratégie MCI ou la stratégie EDF.

On décrit dans ce qui suit la réalisation de l'apprentissage par renforcement dans le cadre du mode de réalisation privilégié où les deux classificateurs exploitent une table de correspondance issue d'un tel apprentissage.

D'une manière générale, l'apprentissage par renforcement a pour objectif d'apprendre, à partir d'expériences, ce qu'il convient de faire en différentes situations, de façon à optimiser une récompense quantitative au cours du temps. A chaque instant t, un contrôleur observe l'état complet du système s et réalise une action donnée *a.* A l'instant *t+1,* le contrôleur observe un nouvel état s' and perçoit une récompense *r* qui évalue l'optimalité de l'action précédente. Le contrôleur passe par un ensemble de transitions (i.e. d'un état à un autre) et explore toutes les paires état-action possibles jusqu'à déterminer le comportement décisionnel (appelé *stratégie* ou *politique,* et qui est une fonction associant à l'état courant l'action à exécuter) optimal en ce sens qu'il maximise la somme des récompenses au cours du temps.

Soit S l'espace des états du système, et $\boldsymbol{s} = [\boldsymbol{s}_1,...,\boldsymbol{s}_P] \in S$ l'état courant du système, qui décrit l'état de chacune des catégories de flux de données. L'état $\boldsymbol{s}_p$ de la catégorie $p$ est défini par l'état de chacun de ses utilisateurs, $\boldsymbol{s}_p = [s_{p,1}[t],...,s_{p,I_p}[t]]$. Les éléments qui décrivent l'état de chaque catégorie peuvent être séparés entre éléments incontrôlables et éléments contrôlables selon qu'ils dépendent ou non de l'action réalisée par le contrôleur. On note ainsi

$$\boldsymbol{s}_p = \left(\boldsymbol{s}_p^C, \boldsymbol{s}_p^U\right),_{\forall\, p\, \in\, T_c} \text{avec } \boldsymbol{s}_p^C \text{ un état contrôlable et } \boldsymbol{s}_p^U \text{ un état incontrôlable. L'état incontrôlable } \boldsymbol{s}_p^U \text{ inclut le}$$

nombre d'utilisateurs actifs par catégorie, les indicateurs CQI des utilisateurs et leur débit entrant de données. L'état contrôlable est caractérisé par les indicateurs de performance de transmission KPI (pour *Key Performance Indicator*) instantanés des utilisateurs et leurs écarts par rapport aux contraintes de QoS. Les $N_{O_P}$ indicateurs KPI instantanés (l'un et/ou l'autre parmi un délai de transmission, un débit de transmission et un taux de perte de transmission par exemple) d'un utilisateur $i_p$ de la catégorie $p$ peuvent être décrits par le vecteur

$$\boldsymbol{x}_{p,i_p}[t] = \left[x_{p,i_p,1}[t], ..., x_{p,i_p,N_{O_P}}[t]\right].$$ Les contraintes de QoS de la catégorie $p$ vis-à-vis de ces indicateurs KPI peuvent être décrites par le vecteur $$\overline{\boldsymbol{x}}_p = \left[\bar{x}_{p,1}, ..., \bar{x}_{p,N_{O_P}}\right],$$ avec $\bar{x}_{p,o}$ un seuil représentatif d'un contrainte de qualité de service QoS portant sur l'indicateur de performance de transmission o pour la catégorie $p$. Ainsi pour chaque utilisateur l'état contrôlable s'écrit $$\boldsymbol{s}_{p,i_p}^C[t] = \left(\boldsymbol{x}_{p,i_p}[t], \overline{\boldsymbol{x}}_p - \boldsymbol{x}_{p,i_p}[t]\right).$$

On note $A = A_{CT} \times A_{CF}$ l'ensemble des actions possibles du contrôleur de l'apprentissage par renforcement, avec $A_{CT}$ l'ensemble des actions correspondant au classificateur temporel et $A_{CF}$ l'ensemble des actions correspondant au classificateur fréquentiel. Plus spécifiquement, $A_{CT} = \{A_{CT,1},...,A_{CT,N}\}$ est un ensemble de taille $N = P!$, où chaque action correspond à une hiérarchisation possible des $P$ catégories de flux de donnés. Et $A_{CF} = \{1,...,N_R\}$ est un ensemble de règles d'ordonnancement de taille $N_R$, où l'action $i \in A_{CF}$ correspond à la sélection de la *ième* règle d'ordonnancement. Ainsi $a = \{a_{CT}, a_{CF}\} \in A$ est la paire d'actions constituée des actions réalisées par chacun des classificateurs.

La fonction de récompense $R$ calcule l'optimalité d'appliquer l'action a à partir d'un état $\boldsymbol{s}$. Elle prend en considération, pour chacun des flux de données de chacune des catégories et pour chaque indicateur de performance, l'écart entre l'indicateur instantané du flux de données et le seuil représentatif d'une contrainte de qualité de service portant sur l'indicateur pour la catégorie à laquelle appartient le flux de données.

Cette fonction de récompense pour le classificateur temporel peut être déterminée comme

$$R(\boldsymbol{s}, a_{CS}, a_{RS}) = \sum_{p=1}^P r_p(\boldsymbol{s}_P, a_{CS}, u_p),$$ où $r_p(\boldsymbol{s}_p, a_{CS}, u_p)$ est la récompense perçue au classificateur fréquentiel lors que la règle d'ordonnancement $u_p$ est utilisée pour la catégorie p d'état $\boldsymbol{s}_P$, étant donné la sélection de la règle de hiérarchisation $a_{CS}$. Ainsi, la récompense perçue au classificateur temporel correspond à la somme de toutes les récompenses du classificateur fréquentiel. Au niveau du classificateur fréquentiel, la fonction de récompense peut être déterminée comme $$r_p(\boldsymbol{s}_P, a_{CS}, u_p) = \sum_{i_p=1}^{I_p} \sum_{o=1}^{N_{O_P}} (1 - |\bar{x}_{p,o} - x_{p,i_p,o}|),$$ à savoir comme étant la somme des récompenses pour chaque utilisateur $i_p \in UE_p$ et pour chaque indicateur KPI $o \in O_p$.

Selon l'invention, l'apprentissage par renforcement peut réaliser un compromis entre exploitation et exploration, où l'exploitation consiste à refaire les actions qui, selon l'expérience acquise, vont maximiser la récompense cumulée et où l'exploration consiste à parcourir des couples (état, action) à la recherche d'une récompense cumulée plus grande, mais au risque d'adopter parfois un comportement sous-optimal. Plus particulièrement, l'apprentissage par renforcement vient retenir un compromis entre exploration et exploitation qui consiste à suivre la politique optimale courante la plupart du temps, tout en choisissant plus ou moins régulièrement une action aléatoire.

Ainsi, l'apprentissage par renforcement selon l'invention comprend à chacune des itérations :

- selon une probabilité $P_a$, une sélection d'exploitation consistant à sélectionner un plan d'allocation de ressources (la règle de hiérarchisation et/ou la première règle d'ordonnancement dans le mode de réalisation privilégié), défini par l'action $a$, venant maximiser la somme des récompenses à ce stade des itérations ; et
- selon une probabilité $P_{a*}$, une sélection d'exploration consistant à sélectionner un plan d'allocation de ressources (la règle de hiérarchisation et/ou la première règle d'ordonnancement dans le mode de réalisation privilégié) potentiellement sous-optimal, défini par l'action $a^* \neq a$.

Dans une première réalisation possible, on adopte le mécanisme appelé ε-greedy selon lequel $P_a = 1 - \varepsilon$, ε étant positif et strictement inférieur à 1, et $P_{a*} = \dfrac{\varepsilon}{K-1}$, où K est égal à $N$ ou $N_R$ selon que l'on considère la règle de hiérarchisation ou la règle d'ordonnancement. Des solutions alternatives à ce mécanisme existent (par exemple l'exploration de Boltzmann) qui, lors d'une itération, associent à chaque action a une probabilité d'être choisie en fonction de récompenses perçues aux itérations précédentes, lorsque cette action est sélectionnée dans l'état $s$.

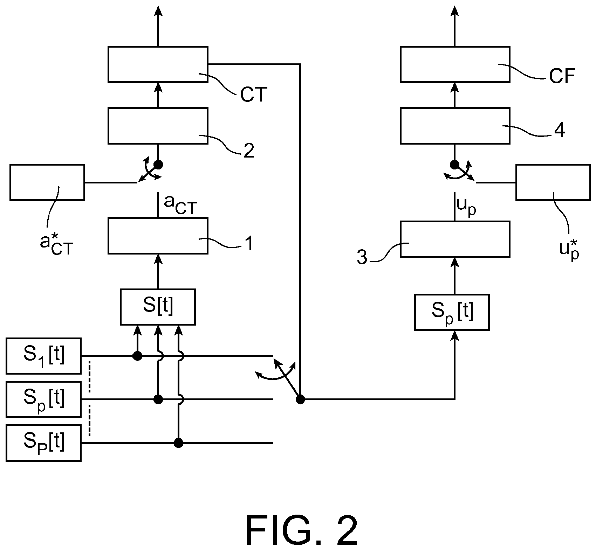

Reprenant l'exemple où les deux classificateurs exploitent une table de correspondance optimisée via l'apprentissage par renforcement, la mise en œuvre du compromis exploration/exploitation est illustré par la figure 2. Sur cette figure, l'état du système à l'instant t $s[t]$ est fourni à un premier module d'apprentissage par renforcement 1 en charge de déterminer la politique optimale en termes de hiérarchisation des catégories de flux de données. Un premier module de compromis exploitation/exploration 2 va sélectionner, selon le mécanisme ε-greedy, avec une probabilité 1-ε, l'action $a_{CT} \in A_{CT}$ déterminée par le premier module d'apprentissage par renforcement 1 sur la base de la politique apprise à ce stade des itérations et, avec une probabilité ε, une action aléatoire $a_{CT}^*$.

Le classificateur temporel CT fournit ensuite successivement les différentes catégories de flux de données au classificateur fréquentiel en fonction de la règle de hiérarchisation sélectionnée (i.e. selon l'action $a_{CT}$ ou $a_{CT}^*$ sélectionnée). Un processus itératif démarre alors, qui s'achève lorsque toutes les catégories de flux de données ont été servies ou lorsque l'intégralité des ressources a été allouée.

Si selon l'action $a_{CT}$ ou $a_{CT}^*$ sélectionnée, la catégorie $p$ doit faire l'objet d'un ordonnancement à la nième itération de ce processus, l'état $s_p$ des utilisateurs appartenant à cette catégorie $p$ est fourni à un second module d'apprentissage par renforcement 3 en charge de déterminer la politique optimale en termes d'ordonnancement des utilisateurs. Un second module de compromis exploitation/exploration 4 va sélectionner, avec une probabilité 1-ε, l'action $a_{CF} = u_p$ déterminée par le second module d'apprentissage par renforcement 3 sur la base de la politique apprise à ce stade des itérations et, avec une probabilité ε, une action aléatoire $u_p^*$. Comme pour le premier module 2, d'autres mécanismes que le ε-greedy (tels que l'exploration de Boltzmann exploration) peuvent être sélectionnés pour optimiser le compromis entre exploration et exploitation.

Ensuite, une récompense $r_p\left(s_P, \{a_{CS}, a_{CT}^*\}, \{u_p, u_p^*\}\right)$ est associée à l'action $u_p$ ou $u_p^*$ sélectionnée. L'ensemble des actions $u_p$ ou $u_p^*$ mises en œuvre pour chacune des P catégories est noté $a_{CF}$. Lorsque le processus itératif s'achève (lorsque toutes les catégories de flux de données ont été servies ou lorsque l'intégralité des ressources a été allouée), une récompense globale $R\left(s, \{a_{CT}, a_{CT}^*\}, a_{CF}\right)$ qui dépend des récompenses perçues pour chaque catégorie est associée à l'action $a_{CT}$ ou $a_{CT}^*$ mise en œuvre par le classificateur temporel CT. Cette récompense globale est utilisée pour mettre à jour les modules d'apprentissage par renforcement 1, 3. Cette mise à jour exploite typiquement la différence entre la récompense escomptée qui est basée sur l'expérience passée et la nouvelle récompense. Lorsque cette différence devient suffisamment faible (par exemple inférieure à $10^{-3}$), le processus d'apprentissage peut être interrompu et la politique apprise peut être stockée dans la table de correspondance LUT. Les classificateurs CT et CF peuvent alors venir simplement consulter cette table pour sélectionner les règles de hiérarchisation et d'ordonnancement optimales pour un état courant donné du système de télécommunication. On notera que lorsque dans un mode de réalisation possible décrit ci-après, la fonction reliant l'état à l'action est approximée par une fonction d'approximation, et les coefficients de la fonction d'approximation sont stockés dans la table de correspondance en lieu de la politique optimale.

Différentes variantes de réalisation sont décrites par la suite.

## Représentation de l'état du système

Afin de réduire la complexité de la solution proposée par l'invention et d'accélérer le processus d'apprentissage, différentes variantes de réalisation peuvent être mises en œuvre, de manière indépendante ou de manière conjointe, pour simplifier la représentation de l'état du système. Comme mentionné précédemment, cet état est composé d'éléments contrôlables et d'éléments incontrôlables. Ces variantes de réalisation visent spécifiquement à représenter de manière efficace l'état en fonction de cette classification.

### Compression de l'espace de l'état contrôlable

Selon cette variante, les variables de l'état contrôlable $s_p^C$ (par exemple délai, débit et taux de perte de paquets) de chacune des catégories de flux de données font l'objet d'un traitement statistique, par exemple pour en calculer la moyenne et la variance. De cette manière, l'état contrôlable n'est plus dépendant du nombre d'utilisateurs $I_p$ dans chacune des catégories de flux de données. La dimension de l'état est ainsi réduit de $\sum_{p \in TC} I_p \cdot O_p$ à $\sum_{p \in TC} 2 \cdot O_p$.

### Compression de l'espace de l'état incontrôlable

Selon cette variante, les variables de l'état incontrôlable $s_p^U$ de chacune des catégories font l'objet d'un traitement statistique de manière à réduire la taille de cet état. Pour certains paramètres, comme pour l'indicateur CQI, il est possible d'éliminer la dépendance au nombre d'utilisateurs $I_p$ dans la catégorie et à la bande passante (i.e. le nombres $N_{RB}$ d'unités de ressources disponibles). Au contraire, pour d'autres paramètres, comme les caractéristiques du flux de données, il est seulement possible d'éliminer la dépendance au nombre d'utilisateurs. Des algorithmes de regroupement (*clustering*) ou de classification peuvent être utilisés à cet effet. Parmi les algorithmes de regroupement, on peut citer les heuristiques de Lloyd ou de Swap. Parmi les algorithmes de classification, on peut citer les machines à vecteurs de support (SVM pour *Support Vector Machine*) ou les réseaux de neurones à fonctions de base radiale (RBFNN pour *Radial Basis Function based Neural Networks*).

## Récompense

On a présenté dans ce qui précède un exemple de calcul d'une fonction de récompense. D'autres fonctions peuvent toutefois être calculées, toutes dépendantes des indicateurs KPI et des contraintes QoS. La récompense attribuée au classificateur temporel peut par exemple être normalisée par le nombre de catégories de flux de données, tandis que la récompense attribuée au classificateur fréquentiel peut par exemple être normalisée par le nombre d'utilisateurs et le nombre d'indicateurs KPI dans la catégorie considérée.

## Techniques d'apprentissage par renforcement

De nombreuses techniques d'apprentissage par renforcement ont été proposées dans la littérature et peuvent être utilisées pour créer la table de correspondance. D'une manière générale, l'objectif d'un apprentissage par renforcement est d'identifier la politique $\pi$ qui minimise (respectivement qui maximise) la valeur attendue d'une certaine fonction $J(\pi)$ représentative d'un coût (respectivement d'une récompense) associé à la réalisation de la politique $\pi$.

Cette fonction $J(\pi)$ peut représenter une somme de récompenses dévaluées:

$$J(\pi) = E\left\{ \sum_{t=0}^{\infty} \gamma^t r_{t+1} | s_0, \pi \right\},$$

Où $s_0$ est l'état initial, $r_{t+1}$ est la récompense perçue lorsque la politique $\pi$ est mise en œuvre partant de l'état $s_0$ et $\gamma \in [0; 1]$ est un taux de dévaluation qui détermine la valeur courante de récompenses futures.

La fonction $J(\pi)$ peut également être représentée comme une récompense moyenne selon :

$$J(\pi) = \lim_{n \to \infty} \frac{1}{n} \mathrm{E}\left\{\sum_{t=0}^{n-1} r_{t+1} | \pi \right\}.$$

En outre, les algorithmes d'apprentissage par renforcement peuvent être divisés en trois groupes : critique pur, acteur pur, acteur-critique.

Méthodes « critique pur »

Ces méthodes apprennent la stratégie optimale $\pi$ en utilisant une fonction $Q^\pi(\mathbf{s},\mathrm{a})$ qui évalue la valeur de chaque paire état-action ($\mathbf{s}$, a) alors qu'il n'y a pas de fonction explicite pour représenter et évaluer la politique en cours d'apprentissage. Lorsque l'objectif est de maximiser une somme dévaluée de récompenses, $Q^\pi(\mathbf{s},\mathrm{a})$ peut être définie selon :

$$Q^\pi(\mathbf{s},\mathrm{a}) = \mathrm{E}\left\{\sum_{t=0}^{\infty} \gamma^t \, r(\mathbf{s}_t, \mathrm{a}_t) | \mathbf{s}_0 = \mathbf{s}; \, \mathrm{a}_0 = \mathrm{a}, \pi \right\}.$$

Selon l'équation d'optimalité de Bellman, the valeur optimale $Q^*(\mathbf{s},\mathrm{a})$ peut être calculée de manière récursive comme suit:

$$Q^*(\mathbf{s},\mathrm{a}) = \mathrm{E}\left\{r(\mathbf{s},\mathrm{a}) + \gamma \max_{\mathrm{a'} \epsilon A} Q(\mathbf{s'},\mathrm{a'}) | \, s, a \right\}$$

Où $\mathbf{s'}$ est l'état suivant observé lorsque l'action a est appliquée en présence de l'état $\mathbf{s}$. Après convergence, il est possible de déterminer l'action optimale a* pour l'état courant $\mathbf{s}$, de telle sorte que $Q^*(\mathbf{s},\mathrm{a})$ soit maximal :

$$\mathrm{a}^* = \operatorname*{argmax}_{\mathrm{a'} \epsilon A} Q^*(\mathbf{s},\mathrm{a})$$

Au final, les paires état-action optimales sont stockées dans la table de correspondance.

Méthodes "acteur pur"

Ces méthodes fonctionnent avec une famille de politiques paramétriques visent à optimiser la fonction $J(\pi)$ directement sur l'espace de paramètres de la politique. Un gradient de la performance, vis-à-vis des paramètres d'acteur, est directement estimé par simulation, and les paramètres sont mis à jour dans une direction d'amélioration. Les méthodes "acteur pur" présentent l'avantage par rapport aux méthodes "critique pur" de permettre à la politique de générer des actions dans un espace d'actions complétement continu.

Considérons une paramètrisation de la politique $\pi$ par le vecteur de paramètres $\theta$. $J(\pi)$ est une fonction de la politique paramétrique $\pi_\theta$ et est fonction de $\theta$. Le gradient de $J$ par rapport à $\theta$ est décrit par:

$$\nabla_\theta J = \frac{\partial J}{\partial \pi_\theta} \frac{\partial \pi_\theta}{\partial \theta}.$$

Ensuite, en utilisant des techniques d'optimisation classiques (comme la descente de gradient), une solution localement optimale de la fonction $J$ peut être identifiée. Un inconvénient de l'approche "acteur pur" est que le gradient estimé peut présenter une variance importante, ce qui accroît la durée nécessaire à l'apprentissage.

Méthodes "acteur-critique"

Ces méthodes visent à combiner les avantages des méthodes "acteur pur" et "critique pur". Comme pour les méthodes "acteur pur", ces méthodes sont capables de prescrire des actions continues, alors que la variance importante des méthodes "acteur pur" est contrecarrée en ajoutant une critique dont le rôle est d'évaluer la politique courante prescrite par l'acteur.

**Fonction approximatrice de l'apprentissage par renforcement**

L'espace état-action peut s'avérer combinatoire et immense. Le problème est alors non seulement la quantité de mémoire nécessaire pour la table de correspondance, mais également le temps et les données nécessaires pour réaliser l'apprentissage de la politique optimale.

Approximation par une fonction linéaire

Il est possible d'avoir recours à une fonction approximatrice $\hat{J}(\cdot, \theta)$ sous la forme d'une fonction linéaire d'un

vecteur de poids $\theta$. Alors, à chaque état **s** correspond un vecteur de caractéristiques $\boldsymbol{\varphi}(\boldsymbol{s}) \triangleq \big(\varphi_1(\boldsymbol{s}), \ldots, \varphi_n(\boldsymbol{s})\big)^{\mathrm{T}}$ ayant le même nombre de composants que $\theta$. Il existe de nombreuses manières d'élaborer les caractéristiques à partir des états, par exemple la fonction de base Fourier ou le codage par tuile (*Tile Coding*). En général, la fonction approximatrice est donnée par le produit scalaire entre $\theta$ et $\boldsymbol{\varphi}(\boldsymbol{s})$: $\hat{J}(\cdot, \boldsymbol{\theta}) = \boldsymbol{\theta}^{\mathrm{T}} \cdot \boldsymbol{\varphi}(\boldsymbol{s}) = \sum_{i=1}^{n} \theta_i \cdot \varphi_i(\boldsymbol{s})$.

Les fonctions individuelles $\varphi_i$ sont appelées fonctions de base parce qu'elles forment une base linéaire pour l'ensemble des fonctions linéaires de cette forme. Construire un vecteur de caractéristiques de n dimensions pour représenter les états est équivalent à sélectionner un ensemble de n fonctions de bases. Il est naturel d'utiliser une descente de gradient stochastique avec une approximation de fonction linéaire pour mettre à jour $\theta$ de manière itérative jusqu'à convergence.

Approximation au moyen d'un système d'inférence flou

Pour représenter de manière efficace l'état d'un système, une solution bien connue consiste à intégrer un système d'inférence flou (FIS pour *Fuzzy Inference System*) dans l'algorithme de Q-apprentissage. Le système FIS est basé sur la logique floue dans laquelle, à la différence de la logique standard, la vérité de toute affirmation est une question de degré, i.e. est notée par une valeur comprise entre 0 et 1. Par ailleurs, le système FIS utilise des variables linguistiques, c'est à dires des variables dont les valeurs sont des mots, comme « haut » ou « bas ». Chaque variable linguistique $x_i$ est associée à un ensemble de termes $T(x_i)$ qui inclue tous les ensembles flous correspondant aux valeurs linguistiques de $x_i$. La phase d'apprentissage comprend trois phases: fuzzification, calcul des valeurs de vérité et défuzzification.

Approximation par un réseau de neurones

Les réseaux de neurones sont un outil puissant pour estimer la fonction optimale $\hat{J}(\cdot, \theta)$. Comme pour l'approche par approximation linéaire, durant la phase d'apprentissage, à l'itération i, les nouveaux poids $\theta_i$ sont calculés de manière à ce que l'erreur quadratique moyenne dans l'équation de Bellman soit réduite. Toutefois, dans ce cas, la fonction approximatrice est calculée comme une fonction non-linéaire des poids $\theta$. Plus particulièrement, si l'on considère un réseau de neurone prédictif à trois niveaux, avec un niveau caché composé de D nœuds et un niveau d'entrée composé de M nœuds, la sortie $k$ peut être calculée comme suit :

$$
y_k(\boldsymbol{x}, \boldsymbol{\theta}) = \sigma\left( \sum_{j=1}^{M} \vartheta_{k,j}^2 \cdot h\left( \sum_{i=1}^{D} \vartheta_{j,i}^1 \cdot x_i + \vartheta_{j,0}^1 \right) + \vartheta_{k,0}^2 \right),
$$

Où $\boldsymbol{x}$ correspond aux entrées du réseau de neurones, $\theta$ est l'ensemble des poids dans le réseau de neurones, $h$ est la fonction d'activation des nœuds cachés (une fonction sigmoïde non linéaire différentiable telle que la sigmoïde logistique ou l'hyperboloïde tangente), et $\sigma$ est la fonction d'activation (la fonction identité est utilisée ici) des nœuds de sortie.

L'invention porte ainsi sur un procédé de détermination d'une allocation de ressources qui met en œuvre l'apprentissage par renforcement décrit précédemment pour déterminer le plan d'allocation de ressources optimal pour un état donné du système de télécommunication. Ce procédé peut être mis en œuvre par un produit programme d'ordinateur. L'invention porte également sur l'exploitation de cet apprentissage et concerne ainsi un procédé d'ordonnancement de paquets comprenant à chaque intervalle temporel de transmission la sélection d'un plan d'allocation de ressources et une allocation des ressources de transmission aux flux de données conformément au plan d'allocation de ressources sélectionné. Cette sélection est réalisée par interrogation d'une table de correspondance dont le contenu résulte de la mise en œuvre de l'apprentissage par renforcement et qui permet d'identifier, à partir de l'état courant du système de télécommunication multi-accès, le plan d'allocation de ressources à sélectionner. L'invention s'étend à un produit programme d'ordinateur comprenant des instructions de code de programme pour l'exécution du procédé d'ordonnancement lorsque ledit programme est exécuté par un ordinateur, ainsi qu'à un nœud d'un système de télécommunication multi-accès qui comprend une table de correspondance dont le contenu résulte de la mise en œuvre de l'apprentissage par renforcement et un planificateur configuré pour, à chaque intervalle de transmission, interroger la table de correspondance pour identifier, à partir de l'état courant du système de télécommunication multi-accès, un plan d'allocation de ressources, et réaliser une allocation de ressources de transmission aux flux de données conformément au plan d'allocation de ressources identifié.

## Revendications

1. Procédé de détermination d'une allocation de ressources pour des paquets appartenant à une pluralité de catégories de flux de données dans un système de télécommunication multi-accès partageant une pluralité de ressources de transmission, ledit procédé comprenant, pour un état du système de télécommunication multi-accès, la détermination, par itérations d'un apprentissage par renforcement, d'un plan d'allocation de ressource venant maximiser une somme de récompenses, chaque itération de l'apprentissage par renforcement comprenant :

   - une allocation des ressources de transmission aux flux de données selon un plan d'allocation de ressources ;
   - la transmission des paquets au moyen des ressources de transmission allouées ;

   ledit procédé étant **caractérisé en ce que** chaque itération de l'apprentissage par renforcement comprend :

   - pour chacune des catégories de flux de données, le calcul d'au moins un indicateur de performance de transmission de chacun des flux de données de la catégorie, et la comparaison, pour chacun des flux de données de la catégorie, de l'au moins un indicateur de performance de transmission calculé à un seuil représentatif d'une contrainte de qualité de service portant sur l'au moins un indicateur de performance de transmission pour la catégorie, et
   - la détermination d'une récompense en fonction du résultat de ladite comparaison pour chacun des flux de données de chacune des catégories.

2. Procédé selon la revendication 1, dans lequel le plan d'allocation de ressources comprend une règle de hiérarchisation et au moins une première et une seconde règle d'ordonnancement, l'allocation des ressources de transmission comprenant deux étapes consistant en :

   - un ordonnancement dans le domaine temporel réalisé par un classificateur temporel (CT) configuré pour hiérarchiser les catégories de flux de données selon la règle de hiérarchisation en au moins une catégorie prioritaire et une catégorie secondaire ; et
   - un ordonnancement dans le domaine fréquentiel réalisé par un classificateur fréquentiel (CF) configuré pour :

      o ordonnancer les flux de données de la catégorie prioritaire selon la première règle d'ordonnancement et allouer des ressources de transmission aux flux de données de la catégorie prioritaire ainsi ordonnancés; et
      o en cas de ressources restantes, ordonnancer les flux de données de la catégorie secondaire selon la seconde règle d'ordonnancement et allouer des ressources de transmission restantes aux flux de données de la catégorie secondaire ainsi ordonnancés.

3. Procédé selon la revendication 2, dans lequel la récompense déterminée à chaque itération est la somme

$$\sum_{p=1}^{P} r_p(a_{CT}, u_p), \text{ avec } r_p(a_{CT}, u_p) = \sum_{i_p=1}^{I_p} \sum_{o=1}^{N_{O_P}} (1 - |\overline{x}_{p,o} - x_{p,i_p,o}|), \text{ où } P \text{ désigne le nombre de}$$

categories, $a_{CT}$ la règle de hiérarchisation, $u_p$ la règle d'ordonnancement appliquée aux flux de données de la catégorie $p$, $I_p$ le nombre de flux de données de la catégorie $p$, $N_{O_P}$ le nombre d'indicateurs de performance de transmission de la catégorie $p$, $\overline{x}_{p,o}$ le seuil représentatif d'une contrainte de qualité de service portant sur l'indicateur de performance de transmission $o$ pour la catégorie $p$ et $x_{p,i_p,o}$ l'indicateur de performance de transmission $o$ du flux de données $i_p$.

4. Procédé selon l'une des revendications 1 à 3, dans lequel chaque itération de l'apprentissage par renforcement comprend:

- selon une probabilité $P_a$, une sélection d'exploitation consistant à sélectionner le plan d'allocation de ressources venant maximiser la somme des récompenses à ce stade des itérations ; et
- selon une probabilité $P_{a^*}$, une sélection d'exploration consistant à sélectionner un plan d'allocation de ressources différent du plan d'allocation de ressources venant maximiser la somme des récompenses à ce stade des itérations.

5. Procédé selon l'une des revendications 1 à 4, dans lequel l'au moins un indicateur de performance de transmission est l'un parmi un délai de transmission, un débit de transmission et un taux de perte de transmission.

6. Procédé selon l'une des revendications 1 à 5, comprenant en outre, à un intervalle temporel de transmission, une allocation de ressources de transmission conformément au plan d'allocation de ressources déterminé pour l'état courant du système de télécommunication multi-accès.

7. Produit programme d'ordinateur comprenant des instructions de code de programme pour l'exécution du procédé selon l'une des revendications 1 à 6 lorsque ledit programme est exécuté par un ordinateur.

**Patentansprüche**

1. Verfahren zum Bestimmen einer Ressourcenzuweisung für Pakete, die zu einer Vielzahl von Datenstromkategorien in einem Telekommunikationssystem mit Mehrfachzugriff gehören, das eine Vielzahl von Übertragungsressourcen gemeinsam nutzt, wobei das Verfahren für einen Status des Telekommunikationssystems mit Mehrfachzugriff das Bestimmen eines Ressourcenzuweisungsplans, der eine Summe von Belohnungen maximiert, durch Iterationen des bestärkenden Lernens umfasst, wobei jede Iteration des bestärkenden Lernens umfasst:

- Zuweisung von Übertragungsressourcen zu den Datenströmen gemäß einem Ressourcenzuweisungsplan;
- Übertragung von Paketen unter Verwendung der zugewiesenen Übertragungsressourcen;

wobei das Verfahren **dadurch gekennzeichnet ist, dass** jede Iteration des bestärkenden Lernens umfasst:

- für jede der Kategorien von Datenströmen, Berechnen zumindest eines Übertragungsleistungsindikators für jeden der Datenströme in der Kategorie, und Vergleichen des zumindest einen berechneten Übertragungsleistungsindikators für jeden der Datenströme in der Kategorie mit einem Schwellenwert, der repräsentativ ist für eine Dienstgütebeschränkung bezüglich des zumindest einen Übertragungsleistungsindikators für die Kategorie, und
- Bestimmen einer Belohnung basierend auf dem Ergebnis des Vergleichs für jeden der Datenströme in jeder der Kategorien.

2. Verfahren nach Anspruch 1, wobei der Ressourcenzuweisungsplan eine Priorisierungsregel und zumindest eine erste und eine zweite Planungsregel umfasst, wobei die Zuweisung von Übertragungsressourcen zwei Schritte umfasst, bestehend aus:

- der Zeitbereichsplanung, die von einem Zeitklassifizierer (CT) durchgeführt wird, der dazu ausgelegt ist, die Kategorien von Datenströmen gemäß der Priorisierungsregel in zumindest eine Prioritätskategorie und eine Sekundärkategorie zu priorisieren; und

- der Frequenzbereichsplanung, die von einem Frequenzklassifizierer (CF) durchgeführt wird, der dazu ausgelegt ist:

  ∘ um Datenströme der Prioritätskategorie gemäß der ersten Planungsregel zu planen und den so geplanten Datenströmen der Prioritätskategorie Übertragungsressourcen zuzuweisen; und
  ∘ im Falle verbleibender Ressourcen die Datenströme der Sekundärkategorie gemäß der zweiten Planungsregel zu planen und die verbleibenden Übertragungsressourcen den so geplanten Datenströmen der Sekundärkategorie zuzuweisen.

3. Verfahren nach Anspruch 2, wobei die in jeder Iteration bestimmte Belohnung die Summe $\sum_{p=1}^{P} r_p(a_{CT}, u_p)$ ist, mit $r_p(a_{CT}, u_p) = \sum_{i_p=1}^{I_p} \sum_{o=1}^{N_{O_P}} (1 - |\overline{x}_{p,o} - x_{p,i_p,o}|)$, wobei $P$ die Anzahl an Kategorien, $a_{CT}$ die Priorisierungsregel, $u_p$ die auf die Datenströme der Kategorie $p$ angewandte Planungsregel, $I_p$ die Anzahl an Datenströmen der Kategorie $p$, $N_{O_P}$ die Anzahl an Übertragungsleistungsindikatoren der Kategorie $p$, $\overline{x}_{p,o}$ den Schwellenwert, der repräsentativ ist für eine Dienstgütebeschränkung bezüglich des zumindest einen Übertragungsleistungsindikators $o$ für die Kategorie $p$ und $x_{p,i_p,o}$ den Übertragungsleistungsindikator $o$ des Datenstroms $i_p$ bezeichnen.

4. Verfahren nach einem der Ansprüche 1 bis 3, wobei jede Iteration des bestärkenden Lernens umfasst:

  - gemäß einer Wahrscheinlichkeit $P_a$ eine Ausnutzungsauswahl, die darin besteht, den Ressourcenzuweisungsplan auszuwählen, der die Summe der Belohnungen in dieser Iterationsstufe maximiert; und
  - gemäß einer Wahrscheinlichkeit $P_{a*}$ eine Explorationsauswahl, die darin besteht, einen Ressourcenzuweisungsplan auszuwählen, der sich von dem Ressourcenzuweisungsplan unterscheidet, der die Summe der Belohnungen in dieser Iterationsstufe maximiert.

5. Verfahren nach einem der Ansprüche 1 bis 4, wobei der zumindest eine Übertragungsleistungsindikator einer aus Übertragungszeit, Übertragungsrate und Übertragungsverlustrate ist.

6. Verfahren nach einem der Ansprüche 1 bis 5, ferner umfassend in einem Übertragungszeitintervall eine Übertragungsressourcenzuweisung gemäß dem Ressourcenzuweisungsplan, der für den aktuellen Status des Telekommunikationssystems mit Mehrfachzugriff bestimmt wurde.

7. Computerprogrammprodukt, enthaltend Programmcodeanweisungen zum Durchführen des Verfahrens nach einem der Ansprüche 1 bis 6, wenn das Programm von einem Computer ausgeführt wird.

**Claims**

1. A method for determining a resource allocation for data flows belonging to a plurality of data flow categories in a multi-access telecommunication system sharing a plurality of transmission resources, said method comprising, for a state of the multi-access telecommunication system, a step of determining, by iterations of a reinforcement learning, a resource allocation plan maximising a reward sum, each iteration of the reinforcement learning comprising:

  - allocating the transmission resources to the data flows according to a resource allocation plan;
  - transmitting the data flows by means of the allocated transmission resources;

  said method being **characterized in that** each iteration of the reinforcement learning comprises:

  - for each of the data flow categories, calculating at least one transmission performance indicator of each of the data flows of the data flow category, and comparing, for each of the packets of the data flow category, the calculated at least one transmission performance indicator with a threshold representative of a quality of service requirement relating to the at least one transmission performance indicator for the data flow category, and
  - determining a reward as a function of the result of said comparing for each of the data flows of each of the categories.

2. The method according to claim 1, wherein the resource allocation plan comprises a hierarchisation rule and at least one first and one second scheduling rule, and wherein allocating the transmission resources to the data flows according to the resource allocation comprises two steps consisting in:

- a scheduling in the time domain made by a time classifier (CT) configured to hierarchise the data flow categories according to the hierarchisation rule into at least one priority category and one secondary category; and
- a scheduling in the frequency domain made by a frequency classifier (CF) configured to:

  ∘ schedule the data flows of the priority category according to the first scheduling rule and allocate transmission resources to the data flows of the priority category as they are scheduled; and
  ∘ in case of remaining resources, schedule the data flows of the secondary category according to the second scheduling rule and allocate the remaining transmission resources to the data flows of the secondary category as they are scheduled.

3. The method according to claim 2, wherein the reward determined at each iteration of the reinforcement learning is the sum $\sum_{p=1}^{P} r_p\left(a_{CT}, u_p\right)$, with $r_p(a_{CT}, u_p) = \sum_{i_p=1}^{I_p} \sum_{o=1}^{N_{O_P}} (1 - \left| \bar{x}_{p,o} - x_{p,i_p,o} \right|),$ where $P$ designates the number of data flow categories, $a_{CT}$ the hierarchisation rule, $u_p$ the scheduling rule applied to the data flows of the data flow category $p$, $I_p$ the number of data flows of the data flow category $p$, $N_{O_P}$ the number of transmission performance indicators of the data flow category $p$, $\bar{x}_{p,o}$ the threshold representative of a quality of service requirement relating to the transmission performance indicator $o$ for the data flwo category $p$ and $x_{p,i_p,o}$ the transmission performance indicator $o$ of the data flow $i_p$.

4. The method according to one of claims 1 to 3, wherein each iteration of the reinforcement learning comprises:

   - according to a probability $P_a$, an exploitation selection consisting in selecting the resource allocation plan maximising the reward sum at this stage of iterations; and
   - according to a probability $P_{a*}$, an exploration selection consisting in selecting a resource allocation plan different from the resource allocation plan maximising the reward sum at this stage of iterations.

5. The method according to one of claims 1 to 4, wherein the at least one transmission performance indicator is one from a transmission delay, a transmission rate and a transmission loss rate.

6. The method according to one of claims 1 to 5, further comprising, at a transmission time interval, allocating transmission resources in accordance with the resource allocation plan determined for the current state of the multi-access telecommunication system.

7. A computer program product comprising program code instructions for executing the method according to one of claims 1 to 6 when said program is executed by a computer.

FIG. 1

FIG. 2

## RÉFÉRENCES CITÉES DANS LA DESCRIPTION

**Documents brevets cités dans la description**

- EP 2148478 B1

- EP 2936908 B1

**Littérature non-brevet citée dans la description**

- « TS 23.203, Policy and charging control architecture, » (Release 14). *3GPP Technical Specification Group Services and System Aspects,* Juin 2017